# EUROPÄISCHE PATENTSCHRIFT

(11) **EP 1 208 900 B1**
(45) Veröffentlichungstag und Bekanntmachung des Hinweises auf die Patenterteilung: **21.01.2009**
(21) Anmeldenummer: 01122347.6
(22) Anmeldetag: 19.09.2001
(51) Int. Cl.: B01D 39/14, B01D 39/08, D04H 1/70, D04H 1/72, D04H 1/46, D04H 13/00, D04H 1/54, D04H 1/42

(54) **Verfahren zur Herstellung eines triboelektrisch geladenen Vliesstoffs**
Process of manufacturing a triboelectrically charged nonwoven
Procédé de fabrication d'un nontissé triboélectriquement chargé

(30) Priorität: 28.11.2000 DE 10059050
(43) Veröffentlichungstag der Anmeldung: 29.05.2002
(73) Patentinhaber: Carl Freudenberg KG, 69469 Weinheim (DE)
(72) Erfinder: Buchwald, Holger, 69502 Hemsbach (DE); Morweiser, Karl-Heinz, 69388 Birkenau (DE); Veeser, Klaus, 69469 Weinheim (DE)

(56) Entgegenhaltungen:
- EP-A- 0 246 811
- EP-A- 0 674 933
- WO-A-00/04216
- WO-A-01/21283
- WO-A-99/52619
- JP-A- 2000 239 955

## Beschreibung

Die Erfindung betrifft ein Verfahren zur Herstellung eines triboelektrisch geladenen Vliesstoffs und seine Verwendung.

Solche Filtermedien bestehen aus einer Fasermischung mit mindestens zwei verschiedenen Faserpolymeren, die sich in der Elektronegativität ihrer Oberfläche so weit unterscheiden, dass sie bei der Herstellung des Faserflors durch Krempeln oder Kardieren und durch die daraus anschließende Verfestigung mit Hilfe eines mechanischen Nadelprozesses elektrostatisch aufladen. Solche Medien sind bereits in den Dokumenten EP 0 246 811 und EP 0 674 933 beschrieben worden und finden als sogenannte "Triboelektrisch geladene Elektretfilter" eine breite Anwendung in der Filtration von Aerosolen.

Um Filtermedien nach diesen Verfahren herzustellen, müssen die Fasern vor dem Krempeln und Kardieren vom Faserfinish gereinigt und alle antistatisch wirksamen Bestandteile sowie die Hilfsmittel entfernt werden, die normalerweise eine gute Verarbeitbarkeit der Fasern auf Krempeln und Karden gewährleisten.

Dadurch entstehen jedoch Nachteile dergestalt, dass die Verarbeitbarkeit der gewaschenen Fasermischung im Vergleich zu den Standardfasern mit Faserfinish deutlich schlechter wird und es bisher nicht gelungen ist "Triboelektrisch geladene Elektretfilter" aus feinen Fasern herzustellen (mittlerer Fasertiter ≤ 1,7 dtex).

Insbesondere ergeben sich Probleme, wenn die Herstellung des Faserflors nach dem im Dokument EP 0 246 811 beschriebenen Verfahren mit Hilfe einer Karde erfolgt. Als Abnehmersystem vom Tambour der Karde wird ein Hacker eingesetzt, mit dessen Hilfe der Faserflor von der Karde abgelöst und auf ein Transportband übergeben wird. Obwohl an der Abnahmestelle durch die Mechanik des Hackers immer wieder eine starke elektrische Aufladung erfolgt und häufige Störungen der Vliesablage resultieren, hat sich diese Technik gegenüber dem üblichen Walzenabnahmesystem durchgesetzt.

Die Verfestigung des Faserflors erfolgt bei den bisher beschriebenen Verfahren durch mechanisches Vernadeln. Bei höheren Flächengewichten des Faserflors wird durch mechanische Verschlingung der Fasern eine gute Verfestigung erzielt, wobei die Nadeln jedoch unerwünschte Kanäle hinterlassen und dadurch die Filtereffizienz des Vliesstoffs reduzieren.

Bei niedrigen Flächengewichten des Faserflors ist die Nadeltechnik jedoch nicht in der Lage eine gute Verfestigung zu erreichen. Sinkt das Flächengewicht unter 100 g/m² bietet der dünne Faserflor den Nadeln nur noch wenig Widerstand und es wird schwierig die Fasern so zu verschlingen, dass ein ausreichender Kraftschluss der Fasern erfolgt.

Deshalb können mit der Vernadelungstechnik leichte "Triboelektrisch geladene Elektretfilter" (Flächengewicht < 50 g/m²) nur hergestellt werden, indem sie mit einem Träger verstärkt werden, der dem Einnadeln der losen Fasern des Faserflors genügend Widerstand entgegensetzt.

Als Träger sind leichte Gewebe, Gitterstrukturen und Vliesstoffe (vorzugsweise Spinnvliesstoffe) gebräuchlich. Obwohl diese Medien zur Filtration von feinen Aerosolen wenig betragen, dienen sie hauptsächlich dem Ziel eine Verbindung des Faserflors mit dem Träger zu ermöglichen und die Mindestanforderungen der Zugfestigkeit für diesen Verbund zu erreichen.

Nachteile bei Verwendung von Trägern sind zum einen die Kosten und zusätzlich die Reduktion der Porosität des Filtermediums.

Auch wenn bei den beschriebenen Verfahren leichte Faserflore unter Zuhilfenahme eines Trägers ausreichend verfestigt werden können, so ist die Gleichmäßigkeit des Vliesbildes (Faserverteilung) unbefriedigend. Mit den üblicherweise eingesetzten Fasermischungen von 2 bis 3 dtex und der Querlegetechnik ist bereits der Faserflor aufgrund der groben Fasern und der Vlieslegetechnik offen und ungleichmäßig, weil die Querlegetechnik zu einer V-förmigen Ablage des Faserflors auf die Zuführeinrichtung zur Verfestigungseinheit und damit zu entsprechenden Inhomogenitäten im Vlies führt. Die Ungleichmäßigkeit wird zusätzlich durch das mechanische Nadeln erhöht, da die Nadeln ganze Teile des Faserflors verschieben und dadurch größere Löcher entstehen.

Ein unregelmäßiges Vliesbild ist jedoch für Filteranwendungen unerwünscht, da die ungleichmäßige Faserverteilung oder gar Löcher die Filterwirksamkeit stark verringern.

Als einen weiteren Nachteil hat sich die geringe Dichte der leichten triboelektrisch geladenen Vliesstoffe herausgestellt. Bei schweren Nadelvliesstoffen kann eine Dichte von 0,25 g/cm³ allein durch das mechanische Vernadeln erreicht werden. Dieser Wert reduziert sich jedoch stark, wenn Faserflore unter 100 g/m² durch die Nadeltechnik verfestigt werden.

Dabei bilden die Fasern an beiden Oberflächen starke Schlaufen und es entstehen voluminöse Vliesstoffe mit einer Dichte von 0,03 - 0,07 g/cm³. Problematisch ist die geringe Dichte der leichtgewichtigen triboelektrisch geladenen Nadelvliesstoffe nicht, solange sie in planer Form zum Einsatz kommen. Sollen sie jedoch in Filterbauteile angeordnet werden, muss in einem begrenzten Raum möglichst viel Filterfläche wirksam untergebracht werden. Dann sind voluminöse Medien im Vergleich zu dünneren Produkten deutlich benachteiligt.

Die Erfindung hat sich die Aufgabe gestellt, ein Verfahren für die Herstellung eines leichtgewichtigen triboelektrisch geladenen Vliesstoffs und seine Verwendungen anzugeben.

Erfindungsgemäß wird die Aufgabe dadurch gelöst, dass eine Fasermischung aus Polyacrylnitrilfasern mit einem Titer ≤ 1,7 dtex und aus Polyolefinfasern mit einem Titer ≤ 1,7 dtex durch Waschen von Schmiermitteln und antistatischen Mitteln befreit, auf einen Feuchtigkeitsgehalt < 1 Gew.-% getrocknet und auf einer Längs- oder Wirrvlieskrempel zu einem triboelektrisch aufgeladenen Faserflor mit einem Flächengewicht von 15 - 80 g/m² kardiert wird, wobei die Abnahme des Faserflors mit zwei gleichlaufenden Walzen und einer Übergabewalze vorgenommen wird, sodass die Ablage des Faserflors in Maschinenrichtung auf ein Transportband und die Verfestigung in einem Verfestigungsaggregat durch Wasserstrahlvemadeln oder thermische Verfestigung mittels einer Rasterwalze in einem Ultraschall- oder einem thermischen Kalander direkt erfolgt, wobei die Weiterleitung des ungebundenen Faserflors nur 1 bis 3 Übergabestellen zwischen Karde und Verfestigungsaggregat besitzt.

Durch die Verwendung einer Längs- oder Wirrvlieskrempel und Ablage des Faserflors in Kardier-Richtung wird ein Verzug des Vlieses im Querleger und Gewichtsvariationen durch die V-förmige Ablage vermieden.

Zur Ablösung des Faserflors von der Krempel werden nicht die üblichen Systeme mit einem Hacker oder einer Abnahmewalze mit kleinem Durchmesser ausgewählt, sondern ein Walzenabzugssystem mit zwei gleichlaufenden Walzen eines größeren Durchmessers (> 200 mm), von denen die erste als Stauchwalze und die zweite als Abnahmewalze dient sowie einer geriffelten Übergabewalze. Mit diesem Abnahmesystem ist es überraschenderweise gelungen auch feintitrige Fasermischungen mit hoher Vliesgleichmäßigkeit zu kardieren und auf das Ablageband zu übertragen.

Um zu vermeiden, dass der kardierte Faserflor nach der Ablage auf das Transportband in Laufrichtung gedehnt wird, muss der Abstand zwischen Karde und Verfestigungsaggregat kurz gewählt werden und es sollen sich möglichst wenig Übergabestellen zwischen Karde und Verfestigungsaggregat befinden. Im Idealfall führt ein ununterbrochenes Transportband den Faserflor direkt von der Karde in das Verfestigungsaggregat.

Vorteilhafterweise wird die Verfestigung mit einem Wasserstrahlvernadelungsprozess durchgeführt, mit dem sich die leichtgewichtige und feintitrigen triboelektrisch geladenen Faserflore gut verfestigen lassen ohne signifikante Beeinträchtigung des Vliesbilds.

Vorteilhafterweise wird die Verfestigung alternativ dazu durch eine rasterförmige thermische Verfestigung des Faserflors mit Hilfe eines Ultraschallkalanders oder mittels beheizter Kalanderwalzen durchgeführt.

Die erfindungsgemäßen Verfestigungsverfahren, Wasserstrahlvernadelung und thermische rasterförmige Bindung weisen jedoch nicht nur den Vorteil auf, dass dadurch die Bindung der Faserflor nicht zerstört und löchrig wird, sie führen auch zu einem stärker verdichteten Vliesstoff.

Solcherart hergestellte Vliesstoffe sind bei gleichem Flächengewicht dünner als die entsprechenden mechanisch genadelten Produkte und lassen sich in Filterbauteilen (zum Beispiel in plissierter Form) vorteilhaft einsetzen.

Bei der rasterförmigen thermischen Verfestigung werden Verfahren bevorzugt, die den Faserflor möglichst wenig verdichten und möglichst wenig thermisch beanspruchen. Dafür ist besonders geeignet eine rasterförmige Verfestigung mit dem Ultraschallkalander, es sind aber auch rasterförmige Verfestigungen mittels beheizter Kalanderwalzen möglich. Im Interesse einer möglichst hohen Porosität soll die Verfestigungsfläche im Bereich von 6 % bis 30 % gewählt werden, dass der Vliesstoff mindestens eine Festigkeit von 4 N für einen 50 mm breiten Reißstreifen, die für die Handhabung und Gebrauch ausreicht, aufweist.

Generell gilt für alle Verfestigungsarten, dass es nicht sinnvoll ist hohe Festigkeits- oder Steifigkeitsanforderungen durch ein erhöhtes Flächengewicht oder eine gesteigerte Verfestigungsfläche des triboelektrischen Vliesstoffs zu erreichen.

Vorteilhafterweise werden als Polyolefinfasern Gemische von Polypropylen- und Polyethylenfasern oder Kernmantelfasern eingesetzt werden, wobei die niedriger schmelzende Komponente als Bindefaser wirkt. Durch die Verwendung von Fasern, die als Bindefasern wirken, werden höhere Festigkeitswerte erreicht.

Vorteilhafterweise wird der erfindungsgemäß erhaltene triboelektrisch aufgeladene Vliesstoff mit anderen verstärkend wirkenden Flächengebilden (zum Beispiel Gitterstrukturen, Gewebe, Papiere, Vliesstoffen usw.) laminiert werden.

Vorteilhafterweise wird der erfindungsgemäß erhaltene triboelektrisch geladenen Vliesstoff zur Herstellung eines mehrlagigen Filtermediums eingesetzt, wobei dem triboelektrisch geladenen Vliesstoff zur Rohluftseite hin eine Vorfilterschicht aus Spinnvliesstoff oder trockengelegtem Vliesstoff vorgeschaltet und zur Reinluftseite hin eine Feinfilterschicht aus Mikrofaservlies und / oder Filterpapier nachgeschaltet wird.

Durch das Anordnen einer Filterschicht mit hoher Porosität auf der Rohluftseite wird ein vorzeitiges Verstopfen der Schicht aus den triboelektrisch aufgeladenen Fasern verhindert und die Lebensdauer des Filtermediums erhöht, das mit dem erfindungsgemäß triboelektrisch geladenen Vliesstoffs hergestellt wird.

Mit besonderem Vorteil werden die erfindungsgemäßen Vliesstoffe für Anwendungen eingesetzt, bei denen eine hohe Filterleistung gefordert ist, aber für das Filterbauteil nur ein kleines Volumen zur Verfügung steht. Für kleine Geräte zur Raumluftreinigung, als Kraftfahrzeugfilter für den Autoinnenraum oder als Motorzuluftfilter werden Filterkassetten oder Patronen mit plissierten Filtermedien in Zickzack-Form hergestellt, bei denen sich mit den leichtgewichtigen triboelektrisch geladenen Vliesstoffen aus Mikrofasern filtertechnische Vorteile erzielen lassen. Damit diese Vliesstoffe die erforderliche Steifigkeit für das Plissieren aufweisen, werden sie mit einem Verstärkungsvliesstoff, einem Kunststoffgitter oder einem Papier laminiert.

Auch als Filtermedium für Staubsaugerbeutel können die erfindungsgemäßen Vliesstoffe vorteilhaft eingesetzt werden. Für diese Anwendung werden Sie als Laminate mit Filterpapieren, Spinnvliesstoffen und / oder Mikrofaservliesstoffen hergestellt. Die Verwendung der triboelektrisch geladenen Vliesstoffe für Staubsaugerbeutel bietet folgende Vorteile.

Als hocheffizientes Elektretfilter verbessern sie die Filtereffizienz der üblichen Filtermedien (speziell der Filterpapiere) signifikant. Bei der Anordnung der triboelektrisch geladenen Vliesstoffe vor der Papierschicht in Durchströmungsrichtung sind sie auch in der Lage die Papierschicht vor dem Feinstaub zu schützen und damit die Saugleistungskonstanz des Staubsaugers zu verbessern. Im Laminat mit Papieren lassen sie sich auf Grund der geringen Dicke gut falten und mit den kostengünstigen Blockbodenbeutelmaschinen zu Filterbeuteln verarbeiten.

Die Erfindung wird in den Beispielen 1 bis 3 näher ausgeführt:

### Beispiel 1

Es wird eine Mischung aus 60 % Polyolefin Bikomponentenfaser mit einer Faserfeinheit von 1,0 dtex und einer Stapellänge von 38 mm und 40 % Polyacrylnitrilfaser 40 mm / 1,3 dtex Fasern hergestellt, anschließend die Faseravivage und Schmiermittel von der Mischung durch Waschen entfernt und die Faser wieder getrocknet auf eine Restfeuchte <1 Prozent. Durch Kardieren der Fasermischung auf einer Wirrvlieskrempel wird ein Faserflor mit einem Flächengewicht von ca. 50 g/m² gebildet und auf einem Aufnahmeband abgelegt, das direkt in den Kalanderspalt eines thermisch beheizten Kalanders führt. Dort wird das Vlies mit einem punktförmigen Gravurmuster (Verschweißfläche 14 %) partiell verfestigt. Dieses Filtermedium hat eine enge Verteilung der Poren und weist damit eine gute Filterwirksamkeit bei niedrigem Flächengewicht auf. Die mechanischen Festigkeiten des Vliesstoffs betragen 10 N / 50 mm Reißstreifen in Laufrichtung und reichen aus für die Handhabung und den Gebrauch.

### Beispiel 2

Es wird eine Mischung aus 60 % Polypropylen Faser 1,7 / 40 mm, und 40 % Polyacrylnitrilfaser 1,7 dtex und 40 mm hergestellt, anschließend die Faseravivage und Schmiermittel von der Mischung durch Waschen entfernt und die Fasern wieder getrocknet auf eine Restfeuchte < 1 Prozent. Mit dieser Fasermischung wird auf einer Wirrvlieskrempel ein Faserflor von ca. 50 g/m² gebildet, auf einem Aufnahmeband abgelegt und nach Zuführung eines 11,5 g/m² schweren extrudierten Polypropylengitters werden beide Lagen direkt in den Kalanderspalt eines thermisch beheizten Kalanders geführt. Dort wird das Vlies mit einem punktförmigen Gravurmuster partiell verfestigt und gleichzeitig mit dem Polypropylengitter laminiert. Das fertige Laminat weist ein gleichmäßiges Vliesbild auf und hat ein Flächengewicht von 60 g/m².

### Beispiel 3

Entsprechend dem im Beispiel 2 beschriebenen Herstellungsverfahren wird ein ca. 35 g/m² schwerer Faserflor hergestellt, der mit einem 11,5 g/m² schweren, extrudierten Polypropylengitter zusammengeführt wird und nach der Verfestigung ein Vliesstofflaminat mit einem Flächengewicht von 46 g/m² ergibt. Dieses zeichnet sich ebenfalls durch eine gute Verteilung der Fasern aus.

### Vergleichsbeispiel

Das Vergleichsbeispiel wird nach dem bisher herkömmlichen Produktionsverfahren aus einer Mischung aus 60 % Polyolefin Bikomponentenfaser 1,7 detx, 40 mm und 40 % Polyacrylnitrilfasern 1,7 dtex, 40 mm hergestellt. Die Fasermischung wird entsprechend Beispiel 1 gemischt, gewaschen und getrocknet. Anschließend wird die Faser auf einer Karde gekrempelt, das gebildete Vlies mit Hilfe eines Hackers vom Tambour abgenommen und auf einen Querleger übertragen, der seinerseits den Faserflor auf einem Band ablegt. Vor dem Nadelstuhl wird zu der 40 g/m² schweren Vlieslage ein Polyesterspinnvliesstoff mit einem Flächengewicht von 30 g/m² zugeführt. Durch mechanisches Vernadeln der beiden Lagen entsteht ein Vliesstoff mit einem Flächengewicht von 70 g/m² der ausreichende mechanische Festigkeitswerte aufweist. Das Vliesbild des Musters ist wolkig und ungleichmäßig.

Die technischen Werte der Beispiele sowie eines kommerziell erhältlichen weiteren Vergleichsmusters sind in der Tabelle 1 zusammengefasst.

**Tabelle 1**

| **Muster** | **Flächen-Gewicht** | **Dicke** | **Luftdurch lässigkeit** | **Durchlass grad NaCl** | **Quotient L:(D_{Nacl} D)** | **Vliesbild index** |
|---|---|---|---|---|---|---|
| Messgröße | g/m² | mm | l/m² · s | % | | |
| Beispiel 1 | 53 | 0,55 | 1800 | 5,2 | 629 | - |
| Beispiel 2 | 60 | 0,70 | 2150 | 10,4 | 294 | 3,2 |
| Beispiel 3 | 46 | 0,55 | 2560 | 12,5 | 373 | 4,9 |
| Vergleichs beispiel 1 | 70 | 1,20 | 2900 | 15,0 | 160 | 9,4 |
| Vergleichs beispiel 2 (kommerziell erhältlich) | 40 | 0,56 | 4600 | 45,0 | 182 | - |

### Prüfmethoden

- Dicke: Meßfläche 10 cm², Meßdruck 12,5 cN/cm² Belastungszeit 1 s
- Luftdurchlässigkeit: DIN 53 887 gemessen bei 200 Pa (Fläche 20 cm²)
- Durchlassgrad Natriumchlorid: Der Durchlassgrad Natriumchlorid wird gemessen mit dem Gerät "TSI Certitest Model 8130". Als Aerosolgenerator wurde das TSI Modell 8118 für Kochsalz verwandt, das Natriumchloridpartikel mit einem mittleren Durchmesser von 0,26 µm (Masse) erzeugt. Gemessen wurde bei einer Filtrationsgeschwindigkeit von 0,08 m/s. Der Durchlassgrad - NaCI ist das Maß für den Durchgang der vom Filtermedium nicht abgeschiedenen Natriumchloridaerosols. Die Druckdifferenz ausgedrückt in Pascal (Pa) ist der statische Druckabfall über dem Filtermedium gegenüber dem Volumenstrom von 0,08 m/s.
- Gleichmäßigkeit Vliesbild: Zur Messung der Gleichmäßigkeit des Vliesbilds wurde ein optoelektrisches Messverfahren eingesetzt. Die Gleichmäßigkeit wird durch den Vliesbildindex ausgedrückt, der um so höhere Werte annimmt je ungleichmäßiger und wolkiger das Vliesbild wird. Bei Vliesstoffen mit sehr guter Faserverteilung werden Werte < 3,5 auf dem Index erreicht.
- Quotient L : (D_{Nacl}.D): Die Qualität eines Filters wird maßgeblich durch die Porosität und die Filterwirksamkeit bestimmt. Ziel ist es, bei einer hohen Porosität (gemessen als Luftdurchlässigkeit L) möglichst wirksam Aerosole abzuschneiden. Es soll also möglichst wenig Aerosol durch das Filter penetrieren (gemessen als Durchlassgrad D_{Nacl}). Um Produkte mit unterschiedlicher Porosität zu bewerten, wird der Quotient aus der Luftdurchlässigkeit und dem Durchlassgrad Natriumchlorid gebildet. Hohe Werte des Quotienten L : D_{Nacl} werden von Filtern mit hoher Abscheideleistung und guter Porosität erreicht. Bei geringer Dicke (D) des Filtermediums ist es möglich, eine größere Filterfläche filterwirksam in einem gegebenen Bauraum unterzubringen. Die Kennzahl L: D_{Nacl} wurde deshalb noch um die Dicke erweitert, um die Vorteile dünner Medien in Filterpatronen, -kassetten usw. zu bewerten.

## Patentansprüche

1. Verfahren zur Herstellung eines triboelektrisch geladenen Vliesstoffs, **dadurch gekennzeichnet, dass** eine Fasermischung aus Polyacrylnitrilfasern mit einem Titer ≤ 1,7 dtex und aus Polyolefinfasern mit einem Titer ≤ 1,7 dtex durch Waschen von Schmiermitteln und antistatischen Mitteln befreit, auf einen Feuchtigkeitsgehalt < 1 Gew.-% getrocknet und auf einer Längs- oder Wirrvlieskrempel zu einem triboelektrisch aufgeladenen Faserflor mit einem Flächengewicht von 15 - 80 g/m² kardiert wird, wobei die Abnahme des Faserflors mit zwei gleichlaufenden Walzen und einer Übergabewalze vorgenommen wird, sodass die Ablage des Faserflors in Maschinenrichtung auf ein Transportband und die Verfestigung in einem Verfestigungsaggregat durch Wasserstrahlvernadeln oder durch thermische Verfestigung mittels einer Rasterwalze in einem Ultraschall- oder einem thermischen Kalander direkt erfolgt, wobei die Weiterleitung des ungebundenen Faserflors nur 1 bis 3 Übergabestellen zwischen Karde und Verfestigungsaggregat besitzt.

2. Verfahren nach Anspruch 1, **dadurch gekennzeichnet, dass** als Polyolefinfasern Gemische von Polypropylen- und Polyethylenfasem oder Kernmantelfasern eingesetzt werden, wobei die niedriger schmelzende Komponente als Bindefaser wirkt.

3. Triboelektrisch geladener Vliesstoff hergestellt nach einem Verfahren gemäß Anspruch 1 und/oder 2.

4. Verwendung eines triboelektrisch geladenen Vliesstoffs nach Anspruch 3 zur Herstellung eines mehrlagigen Filtermediums, **dadurch gekennzeichnet, dass** es als wirksamer Bestandteil eines Laminats mit mindestens einem weiteren Flächengebilde eingesetzt wird.

5. Verwendung eines triboelektrisch geladenen Vliesstoffs nach Anspruch 3 zur Herstellung eines mehrlagigen Filtermediums, **dadurch gekennzeichnet, dass** dem triboelektrisch geladenen Vliesstoff zur Rohluftseite hin eine Vorfilterschicht, ein Spinnvliesstoff oder ein trocken gelegter Vliesstoff vorgeschaltet und zur Reinluftseite hin eine Feinfilterschicht aus Mikrofaservlies und / oder Filterpapier nachgeschaltet wird.

## Claims

1. Process for the production of a triboelectrically charged nonwoven material, **characterized in that** a blend of polyacrylonitrile fibres having a linear density ≤ 1.7 dtex and polyolefin fibres having a linear density ≤ 1.7 dtex is freed of lubricating and antistatic agents by washing, dried to a moisture content < 1% by weight and carded on a longitudinal or randomizing card into a triboelectrically charged web having a basis weight of 15-80 g/m², the removal of the web being effected using two corotating rolls and a transfer roll, thereby effecting the laydown of the web in machine direction on a conveyor belt and the consolidation in a consolidation assembly by water-jet needling or by thermal consolidation by means of an engraved roll in an ultrasonic or thermal calender directly, the forwarding system for the unbound web having only 1 to 3 transfer points between the card and the consolidation assembly.

2. Process according to Claim 1, **characterized in that** the polyolefin fibres used comprise mixtures of polypropylene and polyethylene fibres or sheath-core fibres, the lower-melting component acting as bonding fibre.

3. Triboelectrically charged nonwoven material obtained by following a process according to Claim 1 and/or 2.

4. Use of a triboelectrically charged nonwoven material according to Claim 3 in the manufacture of a multi-ply filter medium, **characterized in that** it is used as an active constituent of a laminate with at least one further sheet material.

5. Use of a triboelectrically charged nonwoven material according to Claim 3 in the manufacture of a multi-ply filter medium, **characterized in that** the triboelectrically charged nonwoven material is preceded on the primary -air side by a prefilter layer, a spunbonded nonwoven material or a dry-laid nonwoven material and followed on the clean-air side by a fine filter layer of microfibre batt and/or filter paper.

## Revendications

1. Procédé de fabrication d'un feutre chargé triboélectriquement,
**caractérisé en ce que**
un mélange de fibres de polyacrylonitrile d'un titre ≤ à 1,7 dtex et de polyoléfine d'un titre ≤ à 1,7 dtex est débarrassé par lavage des lubrifiants et des agents antistatiques, est séché jusqu'à une teneur en humidité < à 1 % en poids et est cardé sur un carde de feutrage longitudinal ou aléatoire pour obtenir un voile de fibres chargé triboélectriquement d'un poids par unité de surface de 15 à 80 g/m²,
la diminution d'épaisseur du voile de fibres étant réalisée directement avec deux cylindres tournant dans le même sens et un cylindre de transfert en plaçant le voile de fibres dans la direction machine sur une bande transporteuse et en le solidifiant dans un ensemble de solidification par aiguilletage à jets d'eau ou par solidification thermique au moyen d'un cylindre tramé, dans une calandre à ultrason ou dans une calandre thermique, le transport du voile de fibres non lié ne présentant que 1 à 3 emplacements de transfert entre le carde et l'ensemble de solidification.

2. Procédé selon la revendication 1, **caractérisé en ce que** comme fibres de polyoléfine, on utilise des mélanges de fibres de polypropylène et de polyéthylène ou des fibres à âme et enveloppe, le composant à plus bas point de fusion servant de fibres de liaison.

3. Feutre chargé triboélectriquement fabriqué à l'aide d'un procédé selon les revendications 1 et/ou 2.

4. Utilisation d'un feutre chargé triboélectriquement selon la revendication 3 pour la fabrication d'un support de filtre multicouche, **caractérisée en ce que** comme composant actif, on utilise un stratifié qui présente au moins un autre produit plat.

5. Utilisation d'un feutre chargé triboélectriquement selon la revendication 3 pour la fabrication d'un support de filtre multicouche, **caractérisée en ce qu'**une couche de pré-filtration, un feutre filé ou un feutre formé à sec sont placés en amont du feutre chargé triboélectriquement, du côté de l'air brut, et **en ce qu'**une couche de filtre fin constituée d'un feutre de microfibres et/ou d'un papier filtre est placée en aval, du côté de l'air purifié.
